# EUROPÄISCHE PATENTSCHRIFT

(11) **EP 3 133 308 B1**
(45) Veröffentlichungstag und Bekanntmachung des Hinweises auf die Patenterteilung: **09.10.2019**
(21) Anmeldenummer: 16182494.1
(22) Anmeldetag: 03.08.2016
(51) Int. Cl.: F16D 21/06

(54) **AXIALE LAMELLENKUPPLUNG**
AXIAL MULTI-PLATE CLUTCH
EMBRAYAGE AXIAL A DISQUES MULTIPLES

(30) Priorität: 04.08.2015 DE 102015214799
(43) Veröffentlichungstag der Anmeldung: 22.02.2017
(73) Patentinhaber: Schaeffler Technologies AG & Co. KG, 91074 Herzogenaurach (DE)
(72) Erfinder: Tepper, Philipp, 77815 Bühl (DE); Nöhl, Oliver, 77830 Bühlertal (DE); Speck, Andre, 76316 Malsch (DE)

(56) Entgegenhaltungen:
- EP-A1- 1 895 182
- EP-A2- 1 783 388
- DE-A1- 10 336 419
- DE-A1-102004 012 948
- DE-A1-102008 034 627
- DE-A1-102012 219 546
- DE-A1-102013 219 390
- DE-A1-102013 225 382
- DE-A1-102013 226 359
- DE-A1-102014 225 967

## Beschreibung

Die vorliegende Erfindung betrifft ein als Doppelkupplung ausgebildetes Kupplungsaggregat, insbesondere zum Einsatz in einem Antriebsstrang eines Kraftfahrzeugs. Doppelkupplungen sind z. B. aus der DE 10 2010 051 447 A1 bekannt. Hierbei sind die Lamellenpakete der einzelnen Kupplungen der Doppelkupplung radial zueinander angeordnet. Hierdurch wird ein relativ großer radialer Bauraum benötigt. Eine axiale Anordnung mehrerer Teilkupplungen mit unterschiedlichen Außendurchmessern ist in DE 20 2013 226 359 A1 vorgeschlagen.

DE 10 2004 012 948 A1 zeigt ein Kupplungsaggregat mit einer axialen Doppelkupplung gemäß dem Oberbegriff des Anspruchs 1.

In DE 10 2013 219 390 A1 ist ein Außenlamellenträger aus Aluminiumdruckguss beschrieben.

Topfförmige Elemente der Koppelkupplungseinrichtung sind an unterschiedlichen radialen Abschnitten unterschiedlich starken Belastungen ausgesetzt. Diese Elemente werden üblicherweise aus Blechen konstanter Materialstärke hergestellt, beispielsweise durch Pressen oder Ziehen. Um die lokalen Belastungen aufnehmen zu können kann die Materialstärke der am höchsten belasteten Stelle für das gesamte Element übernommen werden, wodurch das Element eine große Masse aufweisen kann. Alternativ kann das Element an einer belasteten Stelle mit einer Verstärkungsgeometrie ausgestattet werden, beispielsweise einer Sicke. Dadurch kann jedoch ein erforderlicher Bauraum anwachsen, was bei einer modernen Doppelkupplungseinrichtung mit vielen Elementen auf kleinem Raum nachteilig sein kann.

Der Erfindung liegt daher die Aufgabe zugrunde, eine verbesserte Doppelkupplungseinrichtung bereitzustellen. Die Aufgabe wird gelöst durch ein als doppelte Lamellenkupplung ausgebildetes Kupplungsaggregat gemäß Anspruch 1. Weiterbildungen der Erfindung sind in den Unteransprüchen beschrieben.

Ein Kupplungsaggregat umfasst eine erste Kupplung und eine zweite Kupplung, die bezüglich einer gemeinsamen Drehachse axial versetzt sind, und zumindest ein Element, das radialsymmetrisch zur Drehachse angeordnet ist, wobei das Element eine uneinheitliche Wandstärke aufweist. Dabei ist besonders bevorzugt, dass das Element topfförmig ausgebildet ist.

Durch die uneinheitliche Wandstärke kann das Element genauer an die zu erwartenden Belastungen angepasst sein. Insgesamt kann das Element eine geringere Masse aufweisen, wodurch Herstellungskosten eingespart werden können. Das Element kann gegenüber einem bekannten Element raumsparender oder bei gleichem Raumerfordernis höher belastbar sein. Die uneinheitliche Wandstärke kann insbesondere gebildet sein, indem eine lokale Aufdickung oder eine lokale Schwächung oder Aussparung vorgesehen ist. Bevorzugterweise sind die lokale Aufdickung oder die lokale Schwächung radialsymmetrisch zur Drehachse ausgeführt. Das Kupplungsaggregat kann insbesondere in einem Antriebsstrang eines Kraftfahrzeugs, weiter bevorzugt eines Personenkraftwagens, einsetzbar sein.

Gemäß der Erfindung umfasst das zumindest eine Element zumindest ein gemeinsames Federabstützblech.

Das zumindest eine Element kann weiterhin insbesondere eines von einem Innenlamellenträger, einem Außenlamellenträger und einem axialen Betätigungselement einer der Kupplungen umfassen.

Die Wandstärke des Elements kann in radialer Richtung, in axialer Richtung oder in Umfangsrichtung veränderlich sein. Dadurch kann eine weiter verbesserte Flexibilität bei der Gestaltung des Elements erbracht werden.

Das Element kann auf einem Umfang um die Drehachse eine Anzahl sich in axialer Richtung erstreckender Fortsätze umfassen. Dadurch kann das Element insbesondere vorteilhaft als Betätigungseinrichtung für eine der Kupplungen verwendet werden.

Das Element kann einen Lamellenträger mit einer radialen Verzahnung umfassen und Zähne der Verzahnung können durch die axialen Fortsätze gebildet sein. Im Gegensatz zu einem bekannten Lamellenträger, der im Bereich der radialen Verzahnung mäanderförmig um die Drehachse verläuft, kann so Material zwischen den Zähnen eingespart werden. Das Element kann im Bereich der Zähne aufgedickt sein, also eine größere Wandstärke aufweisen als in einem anderen, beispielsweise radialen Abschnitt. Als Material für das Element kann ein Leichtmetall verwendet werden, sodass die Masseneigenschaften des Elements gegenüber einem bekannten Element aus Stahl mit einheitlicher Wandstärke trotzdem verbessert sein können. Gleichzeitig kann durch den umlaufend geschlossenen Querschnitt des Elements die Drehzahlfestigkeit verbessert sein. Insbesondere dann, wenn das Element einen Innenlamellenträger umfasst, kann eine Zu- oder Abführung von Kühl- oder Schmierflüssigkeit im Bereich der Verzahnung erleichtert sein.

Das Element kann einen radial inneren Bereich und einen radial äußeren Bereich umfasse, zwischen dem eine Kraft übertragbar ist, wobei in einem radial mittleren Bereich, der zwischen dem inneren und dem äußeren Bereich liegt, ein um die Drehachse umlaufender Steg ausgebildet ist, der außerhalb des Kraftflusses liegt. Der Steg kann die Stabilität, die Belastbarkeit oder die Drehzahlfestigkeit des Elements verbessern.

Das Element kann mittels Schmieden, Drückwalzen, Gießen, Druckgießen, Sintern oder spanender Umformung herstellbar sein. Außerdem ist besonders bevorzugt, dass das Element aus einem Leichtmetall herstellbar ist.

Allgemein ist bevorzugt, dass das Kupplungsaggregat dazu eingerichtet ist, in einem Flüssigkeitsbad bzw. in einem nicht komplett mit Öl gefüllten Raum zu laufen. Man spricht in diesem Zusammenhang auch von einer nassen oder nasslaufenden Doppelkupplung bzw. einem Kupplungsaggregat.

Ein Kupplungsaggregat umfasst bevorzugt eine radial klein bauende Doppelnasskupplung (DK), die mittels einer hydrostatischen Aktorik betätigt werden kann. Bei dieser DK sind die beiden Teilkupplungen axial angeordnet, wobei CSCs in die gleiche axiale Richtung betätigt werden können. Die eigentliche Betätigungseinrichtung rotiert nicht. Ein CSC (Concentric Slave Cylinder) umfasst ein Ausrücklager und einen hydraulischen Nehmerkolben, die vorzugsweise in einer separat handhabbaren Einheit zusammengefasst sind. Ein bevorzugterweise am Kupplungsaggregat eingesetzter Doppel-CSC umfasst zwei konzentrisch angeordnete Baugruppen der beschriebenen Art zur unabhängigen Betätigung beider Teilkupplungen einer Doppelkupplung.

Der Doppel-CSC wird bevorzugterweise über drei Arme, die radial über die Kupplung ragen, gegen den Glockenboden geschraubt. Der Kraftfluss erfolgt intern über das Deckellager. Der CSC und die DK können eine Baugruppe bilden, wie aus dem Folgenden und aus den beigefügten Figuren genauer ersichtlich wird.

In einer Ausführungsform kann der Doppel-CSC von der Kupplungsbaugruppe getrennt werden und als Einzelbaugruppe gegen den Glockenboden geschraubt werden. Der Kraftfluss erfolgt dann über das Hauptlager über den Kupplungsdeckel in das Getriebe. Der Kupplungsdeckel kann ein Radiallager zur Lagerung einer Welle der Doppelkupplung umfassen.

Die vorgeschlagene Doppelkupplung kann unterschiedliche Ausführungsformen umfassen, von denen einige im Folgenden umrissen sind:
Ein Kupplungsaggregat umfasst wenigstens zwei Teilkupplungen, die jeweils Lamellenkupplungen sind, wobei die beiden Teilkupplungen in axialer Richtung hintereinander angeordnet sind und die Lamellenpakete der Teilkupplungen überlappungsfrei in axialer Richtung angeordnet sind.

Die Lamellenpakete der Teilkupplungen können jeweils eine Endlamelle aufweisen und über ein Betätigungsorgan die Endlamelle axial verlagert werden um die Eingangslamellen und Ausgangslamellen in Anlage zueinander zu bringen, sodass Drehmoment übertragen werden kann. Dabei besteht das Betätigungsorgan aus einer Kolben-Zylinder-Einheit und die Kolben-Zylinder-Einheiten für die beiden Teilkupplungen sind bevorzugt ineinander radial verschachtelt bereitgestellt, insbesondere in einer Einheit in der Art eines doppelten Concentric Slave Cylinders (CSC).

In dieser Ausführungsform kann das CSC über Betätigungsmittel von einer axialen Seite aus, vorzugsweise getriebeseitig, auf beide Endlamellen beider Teilkupplungen einwirken um die Kupplungen zu betätigen.

Die Teilkupplungen können jeweils betätigbare Endlamellen zum Betätigen der Teilkupplung aufweisen und die Endlamellen der Teilkupplungen können jeweils in die gleiche Richtung, vorzugweise von der Getriebeseite zur Motorseite, axial verlagerbar sein.

Im Kupplungsaggregat nach einer der Ausführungsformen 2 oder 3 kann das Doppel-CSC gehäusefest in Bezug auf das Getriebegehäuse angeordnet sein.

Das Doppel-CSC kann ein Gehäuse aufweisen, das mehrere, vorzugsweise drei, radial verlaufende Arme ausweist, wobei die Arme bevorzugt die Lamellenkupplungen der Teilkupplungen radial übersteigen. Dabei ist das Gehäuse über die Arme fest mit der Kupplungsglocke, d. h. dem Getriebegehäuse verbunden.

Das Doppel-CSC und die Teilkupplungen können eine Baugruppe darstellen und der Kraftfluss kann über ein Deckellager zwischen Kupplungsdeckel und CSC-Gehäuse kupplungsintern geschlossen werden.

Alternativ dazu können das Doppel-CSC und die Teilkupplungen zwei Baugruppen sein, wobei das CSC mit dem Getriebegehäuse verbunden ist, vorzugsweise mittels einer Verschraubung. Der Kraftfluss bei Betätigung kann dabei über ein motorseitiges Hauptlager über einen Dichtungsdeckel des Kupplungsaggregates und über das Getriebegehäuse geschlossen werden.

Das Kupplungsaggregat kann ein nasses Kupplungsaggregat umfassen. Dabei laufen die Elemente des Kupplungsaggregats in einer flüssigen Umgebung, beispielsweise in einem Ölbad (siehe oben). Ein Strom von Flüssigkeit zu vorbestimmten Stellen des Kupplungsaggregats kann beispielsweise mittels einer Pumpe und/oder einem Flüssigkeitskanal bewirkt sein.

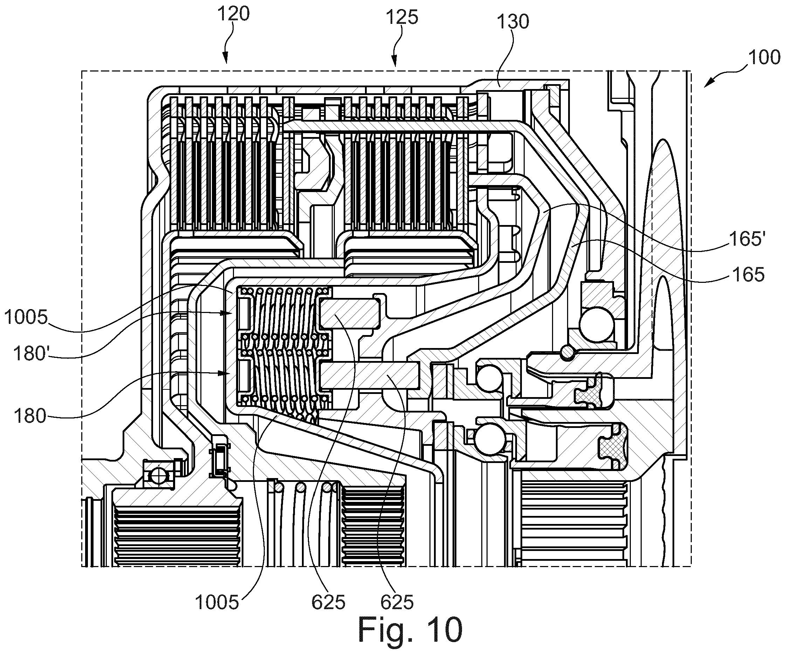

Weitere Ausführungsformen des Kupplungsaggregats, auf welche die Erfindung aber nicht beschränkt ist und aus denen sich eigenständige Merkmale der Erfindung ergeben können, sind in den beigefügten Figuren gezeigt. Dabei zeigt nur die Figur 10 ein erfindungsgemäßes Kupplungsaggregat nach Anspruch 1. Es zeigen:
- Fig. 1: eine Doppelkupplungseinrichtung mit Kraftfluss über ein getriebeseitiges Deckellager;
- Fig. 2: eine alternative Ausführungsform einer Doppelkupplungseinrichtung zu Fig. 1 mit Kraftfluss über ein motorseitiges Hauptlager;
- Fig. 3: die Doppelkupplungseinrichtung nach Fig. 1 an einer Einrichtung zur Übertragung von Drehmoment;
- Fig. 4: eine weitere Ausführungsform einer der Doppelkupplungseinrichtung nach Fig. 1;
- Fig. 5: noch eine weitere Ausführungsform der Doppelkupplungseinrichtung nach Fig. 1;
- Fig. 6: wieder eine weitere Ausführungsform der Doppelkupplungseinrichtung von Fig. 1;
- Fig. 7: verschiedene Ansichten eines Halteelements der Doppelkupplungseinrichtung von Fig. 6;
- Fig. 8: einen ersten Drucktopf der Doppelkupplungseinrichtung von Fig. 6;
- Fig. 9: einen zweiten Drucktopf der Doppelkupplungseinrichtung von Fig. 6;
- Fig. 10: eine weitere Doppelkupplungseinrichtung mit einem topfförmigen Federabstützblech; und
- Fig. 11: eine vollhydraulische Doppelkupplungseinrichtung.

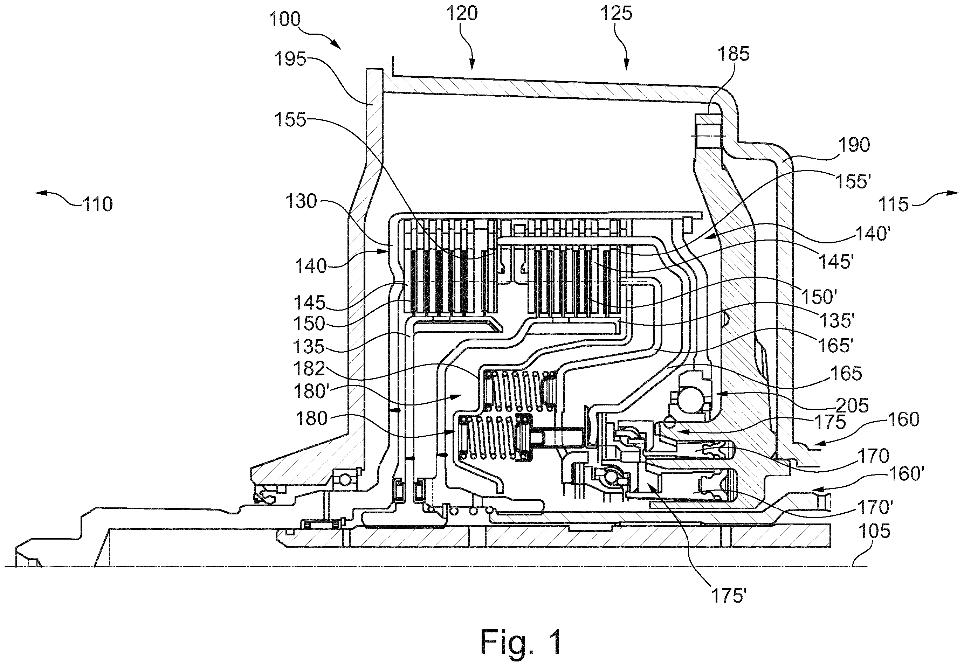

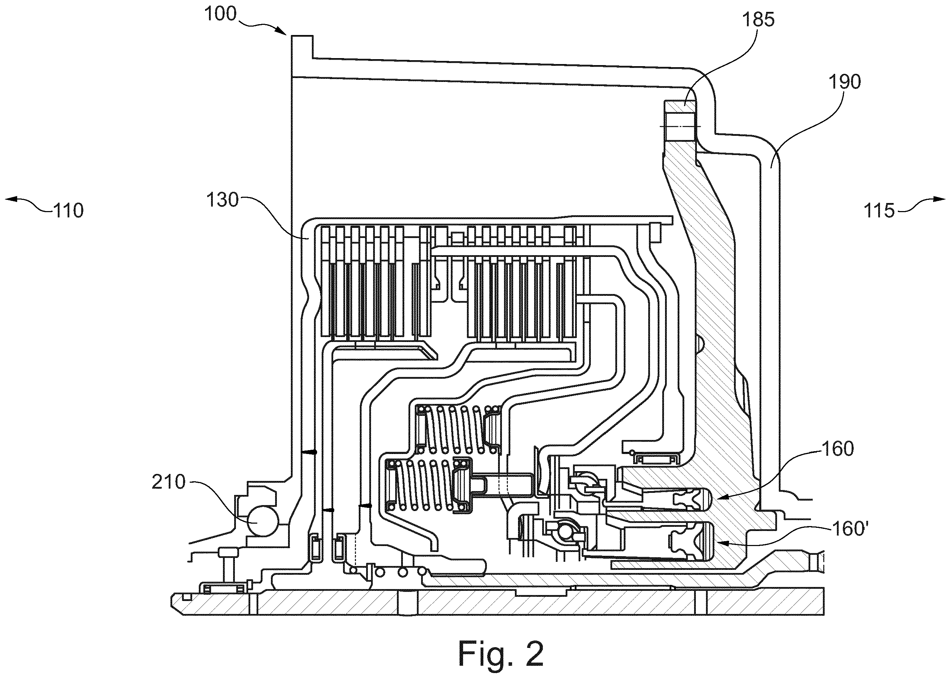

Die Figuren 1 und 2 zeigen beide eine Doppelkupplung, die jeweils in Nassbauweise und axial aufgebaut ist. In Fig. 1 erfolgt der Kraftfluss über ein Deckellager. In Fig. 2 erfolgt der Kraftfluss über ein motorseitiges Hauptlager, welches sich im Kupplungsdeckel abstützt.

In Fig. 1 ist der allgemeine Aufbau der Doppelkupplung, wie er bis auf die Lagerung auch für die Fig. 2 gilt, dargestellt. Die Betätigung der Lamellen erfolgt jeweils über Drucktöpfe aber auch die Verwendung von Hebeln, wie z. B. Tellerfedern ist denkbar. Die Anordnung vom CSC ist hier getriebeseitig dargestellt. Auch eine motorseitige Anordnung ist denkbar. Wesentlich ist, dass die Zylinder des CSC jeweils in die axial gleiche Richtung verlagert werden, um die Lamellen zu betätigen bzw. die Kolben in die gleiche Richtung betätigt werden, um die Lamellenpakete zu komprimieren.

Fig. 1 zeigt ein Kupplungsaggregat 100 mit einer Drehachse 105 zur Übertragung von Drehmoment in einem Antriebsstrang, insbesondere zwischen einem Antriebsmotor 110 und einem Getriebe 115 (beide nicht dargestellt). Das Kupplungsaggregat 100 ist als Doppelkupplung mit einer ersten Teilkupplung 120 und einer zweiten Teilkupplung 125 ausgelegt. Die Teilkupplungen 120 und 125 können separat voneinander betätigt werden, beispielsweise um eine Übertragung von Drehmoment zwischen dem Antriebsmotor 110 und einer ersten Eingangswelle des Getriebes 115 und zwischen dem Antriebsmotor 110 und einer zweiten Eingangswelle des Getriebes 115 unabhängig voneinander zu steuern. Die Doppelkupplung kann insbesondere im Zusammenhang mit einem Doppelkupplungsgetriebe eingesetzt werden. Dabei kann das Kupplungsaggregat 100 axial zwischen dem Antriebsmotor 110 und dem Getriebe 115 vorgesehen sein und mit einem oder beiden der Elemente fest verbunden oder integriert sein.

Ein Außenlamellenträger 130, der dazu eingerichtet ist, drehmomentschlüssig mit einer Abtriebswelle des Antriebsmotors 110 verbunden zu werden, und ein erster Innenlamellenträger 135, der dazu eingerichtet ist, drehmomentschlüssig mit der ersten Eingangswelle des Getriebes 115 verbunden zu werden, tragen in einem radialen Zwischenraum ein erstes Lamellenpaket 140 der ersten Teilkupplung 120. Das erste Lamellenpaket 140 umfasst erste Eingangslamellen 145 und erste Ausgangslamellen 150, die axial alternierend angeordnet sind. Die ersten Eingangslamellen 145 sind drehmomentschlüssig und axial verschiebbar mit dem Außenlamellenträger 130 und die ersten Ausgangslamellen 150 drehmomentschlüssig und axial verschiebbar mit dem ersten Innenlamellenträger 135 verbunden; eine umgekehrte Zuordnung ist ebenfalls möglich.

Das erste Lamellenpaket 140 ist an einer Seite axial gegenüber einem der Lamellenträger abgestützt, bevorzugterweise gegenüber dem Außenlamellenträger 130. An der anderen axialen Seite liegt eine erste Endlamelle 155. Dabei ist ohne Belang, ob die erste Endlamelle 155 eine Eingangslamelle 145 oder eine Ausgangslamelle 150 ist. Die erste Endlamelle 155 kann axial verfahren werden, um das erste Lamellenpaket 140 axial zu komprimieren. Dadurch entsteht ein Kraftschluss zwischen den Eingangslamellen 145 und den Ausgangslamellen 150, sodass ein Drehmoment zwischen dem Außenlamellenträger 130 und dem ersten Innenlamellenträger 135 übertragen werden kann. Man spricht bei diesem Vorgang auch davon, die erste Teilkupplung 120 zu betätigen, sodass sie schließt. Zur Betätigung der ersten Teilkupplung 120 bzw. zur Kompression des ersten Lamellenpakets 140 ist ein Betätigungsorgan 160 vorgesehen, das dazu eingerichtet ist, eine axial wirkende Betätigungskraft bereitzustellen. Diese Betätigungskraft wird auf die erste Endlamelle 155 übertragen, und zwar vorzugsweise mittels eines ersten Betätigungsmittels 165, das insbesondere topfförmig ausgeführt sein kann, wobei es auch als Drucktopf bezeichnet wird. Das erste Betätigungsorgan 160 ist bevorzugterweise hydraulisch gebildet und umfasst eine Kolben-Zylinder-Einheit. Vorliegend ist dazu ein erster Kolben 170 bereitgestellt, der bevorzugterweise über ein erstes Axiallager 175 auf das erste Betätigungsmittel 165 wirkt. Um das erste Betätigungsmittel 165 gegen den ersten Kolben 170 und diesen in den Zylinder zu pressen, ist ein erstes elastisches Element 180 vorgesehen. Dadurch kann die erste Endlamelle 155 entlastet werden, wenn eine Betätigung der ersten Teilkupplung 120 nicht erfolgt bzw. nachlässt. Die erste Teilkupplung 120 kann dadurch in Schlupf geraten oder trennen, sodass die Drehmomentübertragung über die erste Teilkupplung 120 verringert oder aufgehoben ist.

Die zweite Teilkupplung 125 ist im Wesentlichen so wie die erste Teilkupplung 120 aufgebaut; ihre Elemente tragen korrespondierende Bezugszeichen, jeweils mit einem Strich versehen. So sind ein zweiter Innenlamellenträger 135', ein zweites Lamellenpaket 140', zweite Eingangslamellen 145', zweite Ausgangslamellen 150', eine zweite Endlamelle 155', ein zweites Betätigungsorgan 160', ein zweites Betätigungsmittel 165', ein zweiter Kolben 170', ein zweites Axiallager 175' und ein zweites elastisches Element 180' vorgesehen. Für diese Elemente gelten allgemein die oben mit Bezug auf die erste Teilkupplung 120 angegebenen Variationsmöglichkeiten. Der zweite Innenlamellenträger 135' ist zur Verbindung mit einer zweiten Eingangswelle des Getriebes 115 vorgesehen und die zweite Teilkupplung 125 ist dazu vorgesehen, eine Übertragung von Drehmoment zwischen dem Antriebsmotor 110 und der zweiten Eingangswelle zu steuern.

Die beiden elastischen Elemente 180, 180' sind radial versetzt und können sich axial teilweise oder vollständig überlappen. An der einen axialen Seite der elastischen Elemente 180, 180' liegen die Betätigungsmittel 165, 165', die im Wesentlichen parallel zueinander verlaufen. Das zweite Betätigungsmittel 165' führt unmittelbar zur zweiten Endlamelle 155', während das erste Betätigungsmittel 165 durch Aussparungen in den Lamellen 145', 150' geführt ist, um die erste Endlamelle 155 zu erreichen. An der anderen axialen Seite der elastischen Elemente 180, 180' ist ein (erstes) Halteelement 182 vorgesehen, das zum Außenlamellenträger 130 führt. Dabei führt das Halteelement 182 an einer axialen Seite der zweiten Teilkupplung 125 vorbei, die der ersten Teilkupplung 120 abgewandt ist. Das Halteelement 182 umfasst Aussparungen für zur Durchführung der Betätigungsmittel 165, 165'.

Es ist bevorzugt, dass die Teilkupplungen 120 und 125 axial zueinander angeordnet sind. Insbesondere ist bevorzugt, dass axiale innere und äußere Begrenzungen der Lamellenpakete 140, 140' miteinander übereinstimmen. Weiter ist bevorzugt, dass Betätigungsrichtungen, in denen jeweils eine axiale Kraft auf die Endlamellen 155, 155' ausgeübt wird, um die jeweilige Teilkupplung 120, 125 zu betätigen bzw. das zugeordnete Lamellenpaket 140, 140' axial zu komprimieren, gleich gerichtet sind.

Weiter ist bevorzugt, dass die Betätigungsorgane 160, 160' zueinander konzentrisch und insbesondere konzentrisch zur Drehachse 105 angeordnet sind. Außerdem können die Betätigungsorgane 160, 160' um die Eingangs- und Ausgangswellen des Kupplungsaggregats 100 drehbar gelagert sein. Zylinder der Betätigungsorgane 160, 160' können so vereinfacht miteinander integriert sein. In der vorliegenden Ausführungsform sind die Zylinder in einer Trägereinrichtung 185 miteinander integriert, die konzentrische axiale Ringnuten aufweist, in die die hohlzylinderförmigen Kolben 170, 170' axial eingeführt sind. Es ist bevorzugt, dass die Trägereinrichtung 185 die Teilkupplungen 120, 125 bzw. deren zugeordnete Lamellenpakete 140, 140' axial übersteigt, das heißt, sich wenigstens abschnittsweise radial weiter nach außen erstreckt als die Elemente der Teilkupplungen 120, 125. Dazu kann die Trägereinrichtung 185 einen oder mehrere radiale Arme umfassen. Die Trägereinrichtung 185 ist bevorzugterweise in einem Bereich radial außerhalb der Teilkupplungen 120, 125 bzw. deren Lamellenpakete 140, 140' axial oder in Umfangsrichtung gegenüber einem Getriebegehäuse 190 abgestützt, das vom Getriebe 115 umfasst oder zur Verbindung mit dem Getriebe 115 vorgesehen sein kann. Der dargestellte Abschnitt des Getriebegehäuses 190 wird wegen ihrer Form auch Kupplungsglocke genannt. Die dargestellte und bevorzugte Ausführungsform der Betätigungsorgane 160, 160' wird auch CSC (Concentric Slave Cylinder) genannt, die Trägereinrichtung 185 kann daher auch CSC-Gehäuse genannt werden.

Es ist bevorzugt, dass die elastischen Elemente 180, 180' radial innerhalb der Lamellenpakete 140, 140' angeordnet sind. Bevorzugterweise liegen die elastischen Elemente 180, 180' in einem axialen Bereich, der durch axiale Begrenzungen einer Anordnung beider Lamellenpakete 140, 140' definiert ist. In einer Ausführungsform sind die elastischen Elemente 180, 180' radial versetzt angeordnet.

In einer Ausführungsform ist ein Gehäuseelement 195 vorgesehen, der eine Umfassung des Kupplungsaggregats 100, insbesondere in Form des Getriebegehäuses 190, axial in Richtung des Antriebsmotors 110 abschließt. Das Gehäuseelement 195 wird auch Kupplungsdeckel genannt und kann Teil des Antriebsmotors 110 oder zur Verbindung mit dem Antriebsmotor 110 eingerichtet sein. Am Gehäuseelement 195 ist üblicherweise ein Radiallager vorgesehen, um eine zum Antriebsmotor 110 führende Welle zu lagern. Dieses Radiallager wird auch Deckellager genannt.

Um eine Betätigungskraft auf die Endlamellen 155, 155' auszuüben, müssen die Betätigungsorgane 160, 160' axial abgestützt werden. Dazu ist es bevorzugt, den Kraftschluss innerhalb der Kupplungsanordnung 100 zu schließen, das heißt, die Zylinder der Betätigungsorgane 160, 160' - die vorliegend aus der Trägereinrichtung 185 gebildet sind - axial gegenüber dem Außenlamellenträger 130 abzustützen, welcher das axiale Widerlager der Lamellenpakete 140, 140' auf der den Endlamellen 155, 155' abgewandten axialen Seite bildet. In der in Fig. 1 dargestellten Ausführungsform ist hierzu ein Axiallager 205 vorgesehen, das auf der dem Getriebe 115 zugewandten axialen Seite der Teilkupplungen 120, 125 bzw. deren Lamellenpaketen 140, 140' liegt. Das Axiallager 205 wird auch Deckellager genannt. Über ein radiales Abstützelement überträgt das Axiallager 205 axiale Kräfte zwischen der Trägereinrichtung 185 und dem Außenlamellenträger 130.

Fig. 2 zeigt eine alternative Ausführungsform einer Doppelkupplungseinrichtung 100 zu der in Fig. 1 dargestellten Ausführungsform, wobei der Kraftfluss auf eine andere Weise geschlossen ist. Hier ist jedoch anstelle des Axiallagers 205 ein Axiallager 210 vorgesehen, das auf der axialen Seite der Kupplung liegt, die dem Antriebsmotor 110 zugewandt ist. Das Axiallager 210 stützt axiale Kräfte, die auf den Außenlamellenträger 130 wirken, gegenüber einem weiteren Element ab. Dieses Element kann mit dem Antriebsmotor 110 verbunden sein. Bevorzugterweise umfasst dieses Element den Kupplungsdeckel 195, der axial gegenüber der Trägereinrichtung 185 abgestützt ist, beispielsweise über das Getriebegehäuse 190 oder ein dediziertes Gehäuse der Kupplungseinrichtung 100.

Allgemein ist bevorzugt, dass das Kupplungsaggregat 100 in einer flüssigen Umgebung, insbesondere in einer Umgebung von Öl, läuft. Die Flüssigkeit kann gleichzeitig als hydraulisches Fluid der Betätigungsorgane 160, 160' verwendet werden. Die Flüssigkeit kann in bekannter Weise auf einem vorbestimmten Kanal zu vorbestimmten Stellen im Kupplungsaggregat 100 geführt werden.

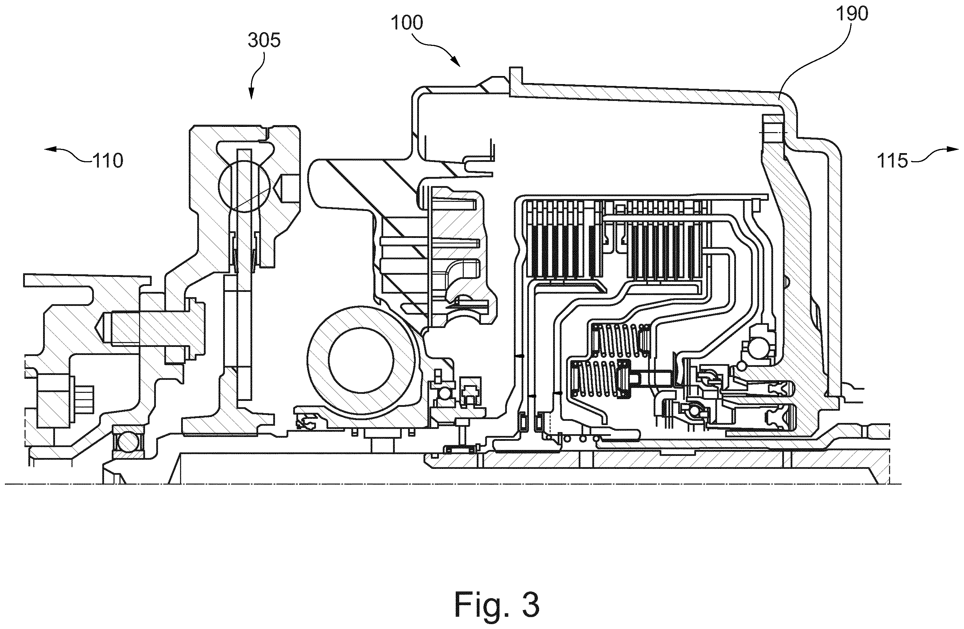

Fig. 3 zeigt eine Doppelkupplungseinrichtung 100 nach Art der von Fig. 1 an einer Einrichtung 305 zur Übertragung von Drehmoment zum Antriebsmotor 110. Die Einrichtung 305 kann insbesondere eines oder mehrere in Umfangsrichtung wirkende elastische Elemente zur Schwingungsdämpfung umfassen. In entsprechender Weise kann auch die Kupplungsanordnung 100 von Fig. 2 an der Einrichtung 305 eingesetzt werden.

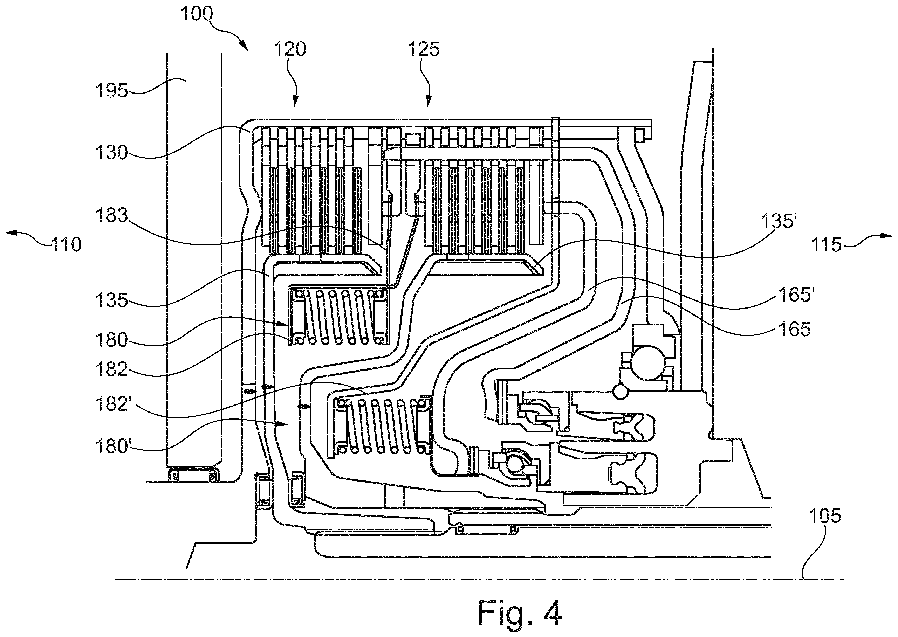

Fig. 4 zeigt eine weitere Ausführungsform der Doppelkupplungseinrichtung nach Fig. 1 mit einer alternativen Anordnung der elastischen Elemente 180, 180'. Diese Ausführungsform kann mit einer der Ausführungsformen der Figuren 1 bis 3 kombiniert werden. Auch hier sind die elastischen Elemente 180, 180' radial versetzt und überschneiden sich in axialer Richtung teilweise.

In der dargestellten Ausführungsform führt der zweite Innenlamellenträger 135' zwischen den beiden elastischen Elementen 180, 180' hindurch, sodass die elastischen Elemente 180, 180 mittels separater Halteelemente 182 abgestützt werden müssen. Ein erstes Halteelement 182 stützt das erste elastische Element 180 und ein zweites Halteelement 182' das zweite elastische Element 180' jeweils gegenüber dem Außenlamellenträger 130 ab. Das zweite Halteelement 182' ist im Wesentlichen so geführt wie das (einzige) Halteelement 182 in der Ausführungsform von Fig. 1, während das erste Halteelement 182 in einem Bereich axial zwischen den Teilkupplungen 120, 125 radial nach außen zum Außenlamellenträger 130 verläuft. Das entgegengesetzte Ende des ersten elastischen Elements 180 wirkt auch nicht unmittelbar auf das erste Betätigungsmittel 165, sondern ist im Bereich axial zwischen den Teilkupplungen 120, 125 mittels eines Zwischenelements 183 mit ihm verbunden. Das Zwischenelement 183 kreuzt axial das Halteelement 182, wobei das eine Element durch eine Aussparung im anderen Element verläuft. Vorteilhaft kann bei dieser Lösung sein, dass das Massenträgheitsmoment des zweiten Innenlamellenträgers 135' durch die geringere axiale Erstreckung im Vergleich zur Lüftfeder-Anordnung in Fign. 1-3, niedriger ausfallen kann.

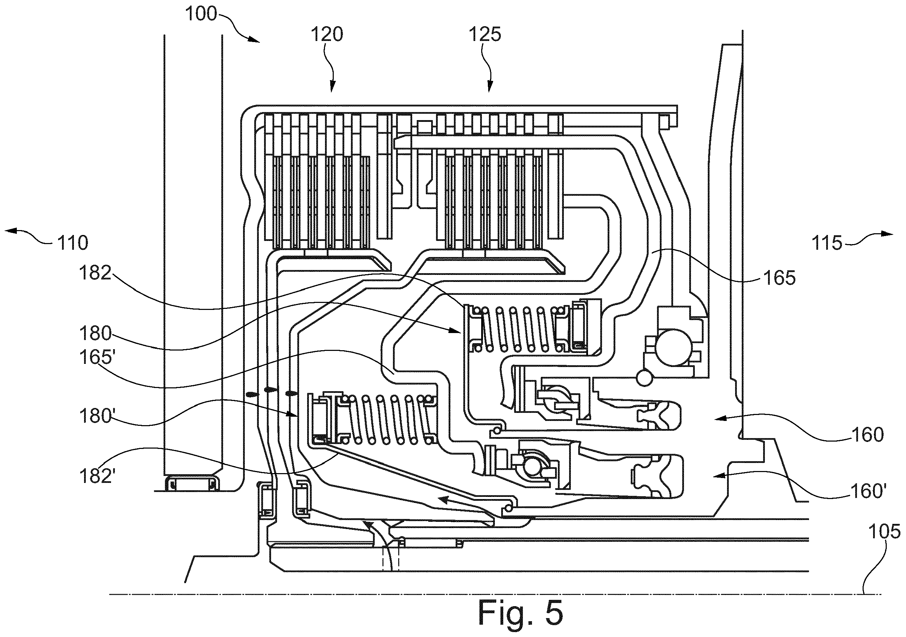

Fig. 5 zeigt noch eine weitere Ausführungsform der Doppelkupplungseinrichtung nach Fig. 1, die ebenfalls mit einer der Ausführungsformen der Figuren 1 bis 3 kombiniert werden kann. Hier sind die elastischen Elemente 180, 180' radial versetzt und können zusätzlich, wie dargestellt, axial vollständig oder teilweise versetzt sein. Das zweite Betätigungsmittel 165' führt zwischen den beiden elastischen Elementen 180, 180' hindurch und das erste elastische Element 180 liegt axial und/oder radial zwischen Abschnitten des ersten Betätigungsmittels 165 und des zweiten Betätigungsmittels 165'. Das erste elastische Element 180 wirkt an einem axialen Ende unmittelbar auf das erste Betätigungsmittel 165 und ist am anderen axialen Ende mittels des Halteelements 182 abgestützt, und zwar bevorzugterweise an einem Abschnitt der Trägereinrichtung 185, der radial zwischen den Betätigungsorganen 160 und 160' liegt.

Das zweite elastische Element 180' wirkt bevorzugt an einem axialen Ende unmittelbar auf das zweite Betätigungsmittel 165' und ist am anderen Ende mittels des zweiten Halteelements 182' abgestützt, und zwar vorzugsweise gegenüber einem Abschnitt der Trägereinrichtung 185, der radial innerhalb beider Betätigungsorgane 160 liegt. Die elastischen Elemente 180, 180' sind jeweils wenigstens an einem axialen Ende mittels eines Axiallagers gegen die Drehbewegung des angrenzenden Bauelements abgestützt. Diese Axiallager können jeweils Wälzlager, insbesondere Nadellager, oder auch Gleitlager umfassen.

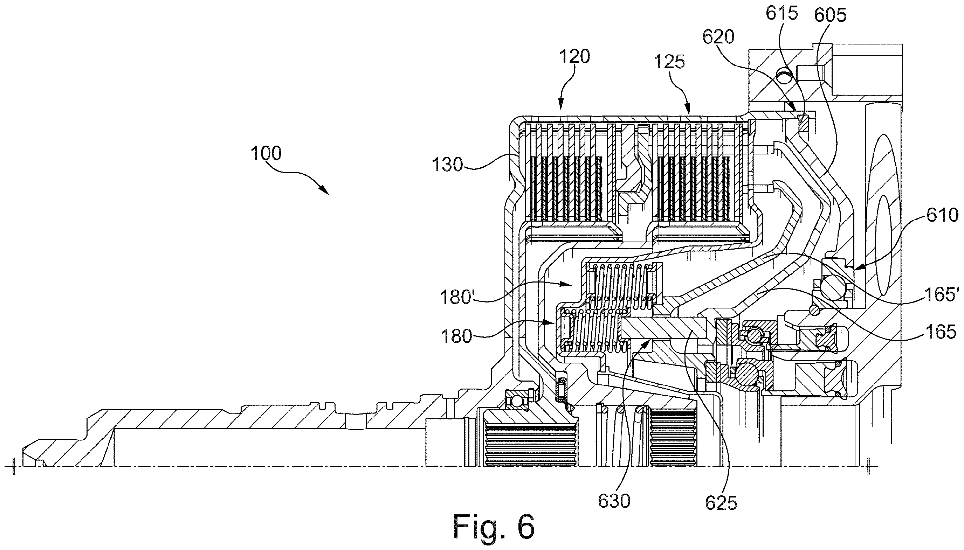

Fig. 6 zeigt eine weitere Ausführungsform einer Doppelkupplungseinrichtung 100 ähnlich der in den vorangehenden Figuren gezeigten Ausführungsformen. Insbesondere lehnt sich die dargestellte Ausführungsform an die von Figur 3 an.

Der Außenlamellenträger 130 ist in einem dem Getriebe 115 zugewandten axialen Bereich mittels eines Halteelements 605 und eines Lagers 610, das insbesondere als Schulterkugellager ausgebildet sein kann, axial gegenüber der Trägereinrichtung 185 abgestützt. Ein Sicherungselement 615, sichert den Außenlamellenträger 130 in einer ersten axialen Richtung am Halteelement 605. So können die axialen Betätigungskräfte der Teilkupplungen 120 und 125 seitens der Trägereinrichtung 185 (dem CSC-Deckel) in den Außenlamellenträger eingeleitet werden. In der dargestellten Ausführungsform ist das Sicherungselement 615 durch einen Haltering gebildet, der in einer radial nach innen offenen, umlaufenden Nut des Außenlamellenträgers 130 liegt. Bevorzugterweise ist der Haltering nicht geschlossen, so dass er zur Montage oder Demontage radial zusammen gedrückt werden kann.

Während einer Montage des Kupplungsaggregats 100 müssen die elastischen Elemente 180, 180' axial komprimiert werden, um das Sicherungselement 615 am Außenlamellenträger 130 befestigen zu können. Dazu werden einander entgegen gesetzte axiale Kräfte auf das Halteelement 605 und den Außenlamellenträger 130 ausgeübt, beispielsweise mittels einer Montagepresse.

Um zu verhindern, dass während der Montage eine übermäßige Kompression erfolgt, die beispielsweise einen der Drucktöpfe 165, 165' einer der Teilkupplungen 120, 125 betätigen oder ein Element des Kupplungsaggregats 100 deformieren kann, ist in der dargestellten Ausführungsform am Außenlamellenträger 130 ein Absatz 620 vorgesehen, der die Kompression des Halteelements 615 gegen den Außenlamellenträger 130 begrenzt. Der Absatz 620 ist bevorzugterweise axial so weit vom Sicherungselement 615 entfernt, dass dessen Montage problemlos möglich ist, wenn das Halteelement 605 am Absatz 620 des Außenlamellenträgers 130 aufliegt. Außerdem kann der Absatz 620 Verkanten des Halteelements 605 gegenüber dem Außenlamellenträger 130 während der beschriebenen axialen Kompression begrenzen.

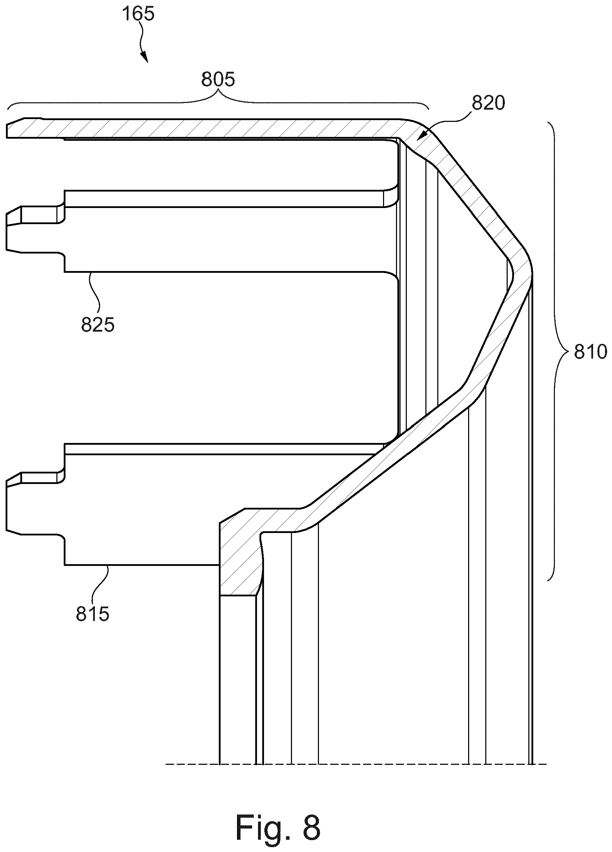

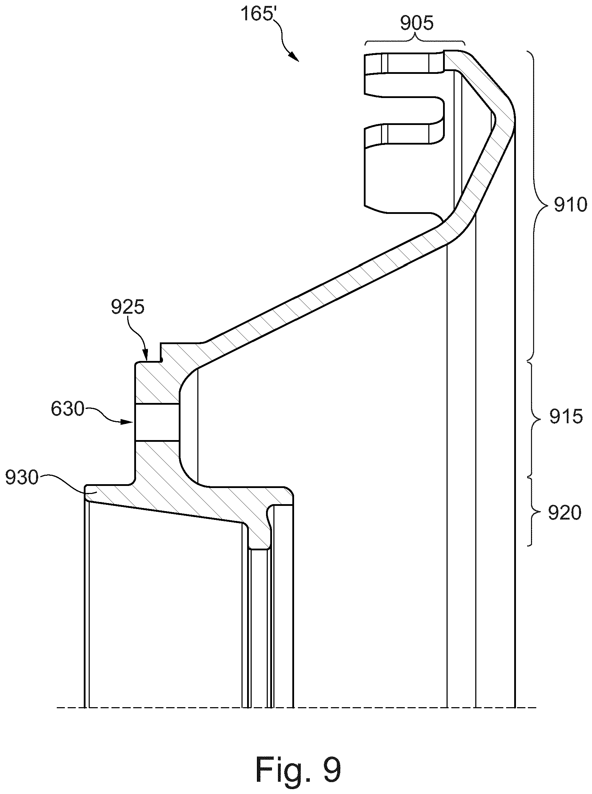

In einem Aspekt, der unten mit Bezug zu Fign. 8 und 9 noch genauer beschrieben wird, ist ein Betätigungsstift 625 vorgesehen, der sich zwischen dem ersten elastischen Element 180 und dem ersten Drucktopf 165 in axialer Richtung erstreckt. Dazu passiert der Betätigungsstift 625 durch eine dafür vorgesehene Aussparung 630 im zweiten Drucktopf 165'. Bevorzugterweise ist der Betätigungsstift 625 zugkraftschlüssig am ersten Drucktopf 165 angebracht, beispielsweise mittels einer Pressverbindung.

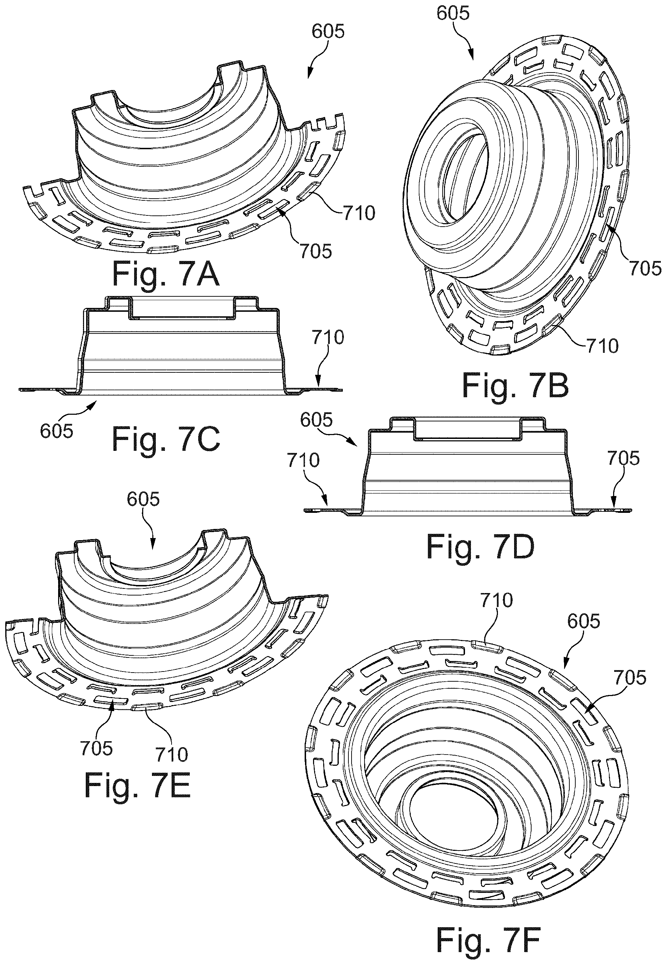

Fig. 7 zeigt verschiedene Ansichten des Halteelements 182 der Doppelkupplungseinrichtung 100 von Fig. 6. Das vorzugsweise topfförmige Halteelement 182 weist bevorzugt einen oder mehrere Durchbrüche 705 zur Durchlass einer Flüssigkeit, insbesondere Öl, auf. Die Durchbrüche liegen bevorzugterweise in einem radial äußeren Bereich des Halteelements 182.

Das Halteelement 182 liegt radial außen an einer inneren Begrenzung des Außenlamellenträgers 130 an. Außerdem liegt das Halteelement 182 in einem radial äußeren Bereich auf einer axialen Seite am Absatz 620 an. Um sowohl eine gute radiale Zentrierung als auch eine gute axiale Anlage des Halteelements 182 am Außenlamellenträger 130 zu realisieren, sind radial außen am Halteelement eine Anzahl Laschen 710 ausgestellt, die sich radial weiter nach außen erstrecken als eine radial äußere Begrenzung des Halteelements 182 zwischen den Laschen 710. Die Laschen 710 sind auch axial ausgestellt, sodass sie die axiale Begrenzung des Halteelements 182 in einem Bereich zwischen den Laschen 710 axial übersteigen. Die Laschen 710 sind dazu eingerichtet, radial außen und einseitig axial am Außenlamellenträger 130 anzuliegen. Dadurch kann sowohl eine radiale als auch eine axiale Passung bewirkt werden. Ein Freistich am Außenlamellenträger 130 zwischen einer radialen und einer axialen Anlagefläche für das Halteelement 182 kann so entfallen. Haltbarkeiten der Verbindung bzw. seiner Verbindungspartner können dabei unbeeinträchtigt sein.

Fig. 8 zeigt das erste Betätigungsmitttel 165, das im Folgenden erster Drucktopf 165 genannt wird. Der gezeigte Aufbau des ersten Drucktopfs 165 ist als exemplarisch für die hier vorgestellte Technik zu verstehen. Der erste Drucktopf 165 weist einen radial äußeren ersten Abschnitt 805 auf, auf dem sich einzelne Finger in axialer Richtung erstrecken. An den ersten Abschnitt 805 grenzt ein radial weiter innen liegender zweiter Abschnitt 810 an, der sich in radialer Richtung erstreckt. In der dargestellten Ausführungsform ist der zweite Abschnitt 810 seinerseits in unterschiedliche radiale Unterabschnitte untergliedert, die sich in unterschiedlichen Winkeln zur Drehachse 105 (nicht eingezeichnet) erstrecken. Wo die einzelnen Unterabschnitte aneinander angrenzen, ist der erste Drucktopf entsprechend gebogen. Radial innen grenzt der zweite Abschnitt 810 an einen dritten Abschnitt 815 an, der sich nur in radialer Richtung erstreckt.

Der Drucktopf 165 wurde bislang üblicherweise durch Ziehen oder Pressen aus einem Stahlblech hergestellt. Ein solcher erster Drucktopf 165 weist, abgesehen von verfahrensspezifischen Effekten wie Verjüngung durch Abstrecken, über seinen radialen Verlauf eine gleichmäßige Materialstärke auf.

Es wird vorgeschlagen, einzelne Bereiche des ersten Drucktopfs 165 gezielt mit erhöhter oder verringerter Materialstärke gegenüber den restlichen Bereichen auszuführen. Dabei ist allgemein bevorzugt, dass ein lokaler Abschnitt mit geänderter Materialstärke rotationssymmetrisch zur Drehachse 105 (nicht dargestellt) verläuft. Dazu wird bevorzugterweise ein anderes Herstellungsverfahren als Pressen oder Ziehen verwendet, beispielsweise Gießen, Druckgießen oder Drehen. Dabei kann ein passender Werkstoff verwendet werden, der sich von Stahl unterscheiden kann, etwa ein Leichtmetall wie Aluminium oder Magnesium, oder auch ein Kunststoff.

Zwischen den Abschnitten 805 und 815 liegt eine umlaufende Aufdickung 820, an der die Wandstärke ersten Drucktopfs vergrößert ist. Die Aufdickung 820 kann die Steifigkeit oder Festigkeit des ersten Drucktopfs 165 verbessern. Dadurch kann der erste Drucktopf insbesondere drehzahlfester ausgeführt sein. Ein geometrisches Element, wie es zur Verstärkung dieses Übergangs an einem bekannten ersten Drucktopf 165 mit konstanter Materialstärke nötig wäre, beispielsweise eine Faltung oder eine Sicke, kann so vermieden werden. Ein für das geometrische Element erforderlicher Bauraum kann durch die Aufdickung 820 eingespart werden.

Der dritte Abschnitt 815 weist hier eine größere Materialstärke als beispielsweise der zweite Abschnitt 810 auf. Der dritte Abschnitt 815 kann in axialer Richtung einseitig ballig ausgeführt sein, um ein verbessertes Tragverhalten bei der axialen Anlage am ersten Kolben 170 bzw. einem zwischen dem ersten Kolben 170 und dem ersten Drucktopf 165 liegenden Ausrücklager (Einrücklagers) zu realisieren. Die Bearbeitung des Ballus kann auf der Basis des stärker ausgeführten dritten Abschnitts 815 erfolgen, wobei der Ballus durch Wegnahme von Material ausgebildet werden kann, etwa durch Schleifen oder Drehen. Die vergrößerte Materialstärke im dritten Abschnitt 815 kann auch vorteilhaft genutzt werden, um eine Aussparung (nicht dargestellt) für den in Fig. 6 gezeigten Betätigungsstift 625 einzubringen, insbesondere als Sackloch, beispielsweise durch Bohren, Fräsen oder Reiben. Der Betätigungsstift 625 kann in die Aussparung mit Klemmsitz eingesetzt bzw. eingepresst werden oder auch nur schubkraftschlüssig ins Sackloch eingesetzt sein.

Die radial variable Materialstärke des ersten Drucktopfs 165 ist bevorzugterweise durch ein Herstellungsverfahren ermöglicht, das vom sonst üblichen Pressen oder Tiefziehen derartiger Teile abweicht. Bei einer Kleinserie kann der Drucktopf 165 beispielsweise komplett mittels spanender Umformungen hergestellt werden. Bei größeren Stückzahlen bieten sich als Herstellungsverfahren insbesondere Schmieden, Drückwalzen, Gießen oder Sintern an. Alternativ kann der erste Drucktopf 165 auch gegossen oder druckgegossen werden. Gegebenenfalls kann im Anschluss an eines dieser Verfahren eine spanende Nacharbeit durchgeführt werden. Durch diese Herstellungsverfahren kann der erste Drucktopf 165 in seiner radialen Geometrie gezielt an geltende Anforderungen angepasst werden. Lokale Aufdickungen sind genauso wie lokale Schwächungen möglich.

Ein verstärkter radialer Abschnitt am ersten Drucktopf 165 kann zur Versteifung oder zur Reduzierungen von Materialspannungen, insbesondere an hochbelasteten oder kritischen Stellen, dienen. Es kann auch ein beispielsweise radialer oder axialer Kragen oder Steg ausgebildet werden, der außerhalb des eigentlichen Kraftflusses des Drucktopfs 165 liegt und hauptsächlich der Versteifung dient.

In weniger hoch belasteten Bereichen kann ein Abschnitt des Drucktopfs 165mit reduzierter Materialstärke zur Massenreduktion führen, was die Drehzahlfestigkeit des ersten Drucktopfs 165 weiter steigern kann. Die rotatorische Dynamik des ersten Drucktopfs 165 kann durch seine gesenkte Rotationsmasse verbessert sein. Eine Leistungsdichte oder Effizienz des ersten Drucktopfs 165 kann verbessert sein. Darüber hinaus können durch die Materialeinsparung Kostenvorteile entstehen. Ein zur Verfügung stehender Bauraum kann verbessert genutzt werden oder ein erforderlicher Bauraum kann reduziert sein. Durch den Abschnitt mit veränderter Materialstärke ist es ferner möglich, zusätzliche Funktionen im ersten Drucktopf 165 zu integrieren, beispielsweise durch Ausbilden eines axialen Stegs, etwa als Anlagefläche.

Fig. 9 zeigt den zweiten Drucktopf 165' der Doppelkupplungseinrichtung 100 von Fig. 6. Im Wesentlichen gelten die oben bezüglich des ersten Drucktopfs 165 beschriebenen Alternativen und Optionen auch für den zweiten Drucktopf 165' und umgekehrt.

Ähnlich wie der erste Drucktopf 165 umfasst der zweite Drucktopf 165' von radial außen nach innen einen ersten Abschnitt 905, der sich in axialer Richtung erstreckt, einen sich daran anschließenden zweiten Abschnitt 910, der in mehrere Unterabschnitte unterteilbar ist, die sich jeweils sowohl in radialer als auch in axialer Richtung erstrecken, einen daran anschließenden radial verlaufenden dritten Abschnitt 915 und einen hauptsächlich axial verlaufenden vierten Abschnitt 920. Der dritte Abschnitt 915 ist bevorzugterweise lokal radialsymmetrisch aufgedickt, um dem zweiten Drucktopf 165' eine höhere Stabilität oder Steifigkeit zu verleihen. In diesem Bereich ist auch die optionale axiale Aussparung 630 zur Aufnahme des Betätigungsstifts 625 vorgesehen. Ein optionaler Absatz 925 stellt eine radiale Anlagefläche bereit, an der insbesondere eine Anlagescheibe bezüglich der Drehachse 105 (nicht dargestellt) zentriert werden kann, die axial zwischen dem zweiten elastischen Element 180' und dem zweiten Drucktopf 165' (vgl. Fig. 6) anliegt. Dadurch kann eine zusätzliche Funktion in den zweiten Drucktopf 165' integriert werden. Im vierten Abschnitt 920 ist exemplarisch die Materialstärke des zweiten Drucktopfs 165' in axialer Richtung kontinuierlich verändert. Außerdem kann hier ein axialer Kragen 930 ausgebildet sein, der außerhalb des eigentlichen Kraftflusses liegt, der zwischen dem radial innersten Bereich des vierten Abschnitts 920 und dem radial äußersten ersten Abschnitt 905 verläuft. Der Kragen 930 kann der Versteifung des zweiten Drucktopfs 165' dienen. Der innerste Bereich des vierten Abschnitts 920 kann eine einseitig ballige axiale Anlagefläche aufweisen, die oben mit Bezug auf Fig. 8 bereits beschrieben wurde.

Fig. 10 zeigt eine weitere Doppelkupplungseinrichtung 100 analog einer der oben beschriebenen Doppelkupplungseinrichtungen 100. In der dargestellten Ausführungsform liegt jeweils zwischen einem Drucktopf 165, 165' und dem zugeordneten elastischen Element 180, 180' ein axialer Betätigungsstift 625. Die beiden elastischen Elemente 180, 180' können sich über ein gemeinsames, vorzugsweise topfförmiges Federabstützblech 1005 abstützen, das hier gegenüber dem Außenlamellenträger 130 gelagert ist. Das Federabstützblech 1005 kann beispielsweise im Bereich der elastischen Elemente 180, 180' einen radial verlaufenden Abschnitt aufweisen, der verdickt ausgeführt ist, also eine gegenüber anderen Abschnitten des Federabstützblechs 1005 eine größere Materialstärke aufweist. Ein weiterer radialer Abschnitt, der radial weiter außen bis zum Außenlamellenträger 130 führt, kann ebenfalls verdickt ausgeführt sein. Dies entspricht einer Ausführungsform, bei der die Abschnitte des Federabstützblechs 1005, die sich nicht in rein radialer Richtung erstrecken, verdünnt sind. Durch die Verdickungen können die radialen Abschnitte, die bei axialer Belastung des Federabstützblechs 1005 verstärkt auf Biegung belastet sind, stabiler ausgeführt werden. Ein strukturelles bzw. geometrisches Versteifungselement wie eine radiale Sicke kann dadurch eingespart werden. Insbesondere im radial äußeren Bereich kann dadurch Bauraum eingespart werden, den das Federabstützblech 1005 einnimmt.

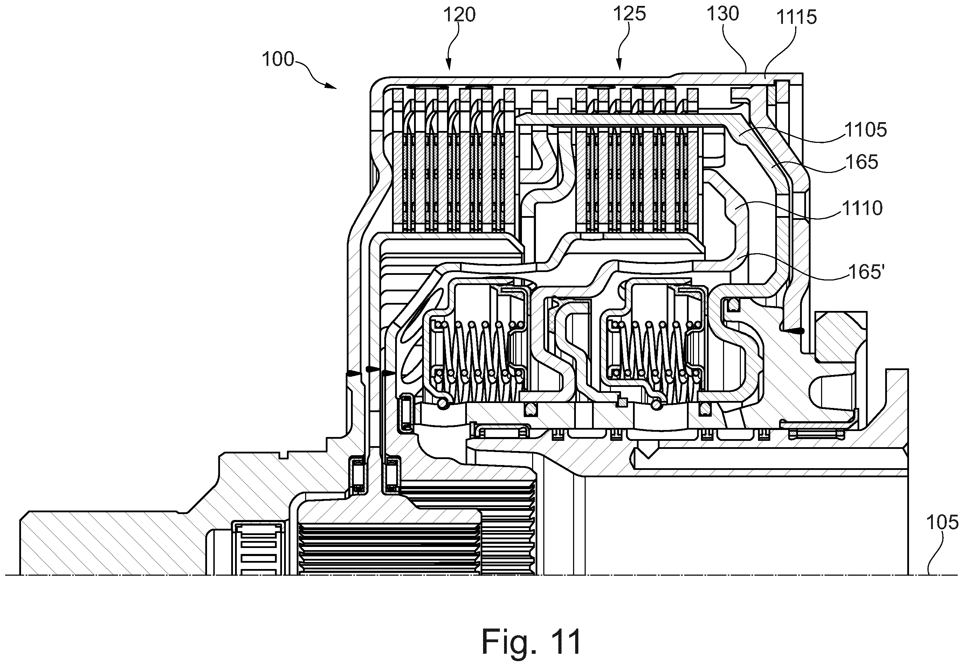

Fig. 11 zeigt eine vollhydraulische Doppelkupplungseinrichtung 100. Im Unterschied zu den in den anderen Figuren gezeigten Ausführungsformen der Doppelkupplungseinrichtung 100 erfolgt hier die hydraulische Betätigung der Teilkupplungen 120 und 125 nicht durch eine hydrostatische Gebereinheit, die beispielsweise einen Geberzylinder in einem Geberkolben und einen Spindeltrieb zur Bewegung des Geberkolbens umfassen kann, sondern durch eine Pumpe erzeugte hydraulische Drücke eines hydraulischen Fluids. Die Wirkungsweise der Drucktöpfe 165, 165' ist jedoch mit der in den oben geschilderten Ausführungsbeispielen für eine Doppelkupplungseinrichtung 100 vergleichbar.

Der erste Drucktopf 165 kann eine lokale Aufdickung 1105 und der zweite Drucktopf 165' unabhängig davon eine lokale radialsymmetrische Aufdickung 1110 aufweisen. Beide Aufdickungen können zur Erhöhung der Stabilität der Drucktöpfe 165, 165' dienen. Einerseits können dadurch Biegespannungen abgebaut, andererseits kann einer dynamischen Verformung der Drucktöpfe 165, 165' unter Drehzahleinfluss entgegen gewirkt werden.

In einer weiteren Ausführungsform können auch der Außenlamellenträger 130, der erste Innenlamellenträger 135, der zweite Innenlamellenträger 135' oder ein anderes Element der Doppelkupplungseinrichtung 100 lokal aufgedickt oder reduziert sein, um die entstehenden Belastungen verbessert aufzufangen. Dabei sind um die Drehachse 105 umlaufende Aufdickungen bzw. Reduktionen allgemein bevorzugt.

### Bezugszeichenliste

- 100: Kupplungsaggregat, Kupplungseinrichtung, Kupplungsanordnung, Doppelkupplungseinrichtung
- 105: Drehachse
- 110: Antriebsmotor
- 115: Getriebe
- 120: erste Teilkupplung
- 125: zweite Teilkupplung
- 130: Außenlamellenträger

- 135: erster Innenlamellenträger
- 140: erstes Lamellenpaket
- 145: erste Eingangslamellen
- 150: erste Ausgangslamellen
- 155: erste Endlamelle
- 160: erstes Betätigungsorgan
- 165: erstes Betätigungsmittel (Drucktopf)
- 170: erster Kolben
- 175: erstes Axiallager
- 180: erstes elastisches Element

- 135': zweiter Innenlamellenträger
- 140': zweites Lamellenpaket
- 145': zweite Eingangslamellen
- 150': zweite Ausgangslamellen
- 155': zweite Endlamelle
- 160': zweites Betätigungsorgan
- 165': zweites Betätigungsmittel (Drucktopf)
- 170': zweiter Kolben
- 175': zweites Axiallager
- 180': zweites elastisches Element

- 182: Halteelement
- 182': Halteelement
- 183: Zwischenelement
- 185: Trägereinrichtung (CSC-Gehäuse)
- 190: Getriebegehäuse
- 195: Gehäuseelement (Kupplungsdeckel) (Dichtungsdeckel) (motorseitig)
- 205: Axiallager (Deckellager) (getriebeseitig)
- 210: Axiallager (Hauptlager) (motorseitig)

- 305: Einrichtung zur Übertragung von Drehmoment

- 605: Halteelement
- 610: Lager
- 615: Sicherungselement
- 620: Absatz
- 625: Betätigungsstift
- 630: Aussparung

- 705: Durchbruch
- 710: Lasche

- 805: erster Abschnitt
- 810: zweiter Abschnitt
- 815: dritter Abschnitt
- 820: Aufdickung
- 825: Finger

- 905: erster Abschnitt
- 910: zweiter Abschnitt
- 915: dritter Abschnitt
- 920: vierter Abschnitt
- 925: Absatz
- 930: Kragen

- 1005: Federabstützblech

- 1105: erste Aufdickung
- 1110: zweite Aufdickung

## Patentansprüche

1. Kupplungsaggregat (100) umfassend:
- eine erste Kupplung (120), mit
- einem Außenlamellenträger (130), der dazu eingerichtet ist, drehmomentschlüssig mit einer Abtriebswelle eines Antriebsmotors (110) verbunden zu werden;
- einem ersten Innenlamellenträger (135), der dazu eingerichtet ist, drehmomentschlüssig mit einer ersten Eingangswelle eines Getriebes (115) verbunden zu werden;
- wobei der Außenlamellenträger (130) und der Innenlamellenträger (135) in einem radialen Zwischenraum ein erstes Lamellenpaket (140) der ersten Teilkupplung (120) tragen, wobei das erste Lamellenpaket (140) erste Eingangslamellen (145) und erste Ausgangslamellen (150), die axial alternierend angeordnet sind, umfasst, wobei
- zur Betätigung der ersten Teilkupplung (120) bzw. zur Kompression des ersten Lamellenpakets (140) ein als topfförmiges Betätigungselement ausgebildeter Drucktopf (165) vorgesehen ist, der dazu eingerichtet ist, eine axial wirkende Betätigungskraft bereitzustellen, wobei diese Betätigungskraft auf die erste Endlamelle (155) übertragen wird und
- der Drucktopf (165) an einer axialen Seite eines ersten elastischen Elements (180) liegt; weiterhin
- eine bezüglich einer gemeinsamen Drehachse (105) axial versetzt angeordnete zweite Kupplung (125), mit
- einem zweiten Innenlamellenträger (135') zur Verbindung mit einer zweiten Eingangswelle des Getriebes (115),
- wobei der Außenlamellenträger (130) und der zweite Innenlamellenträger (135') in einem radialen Zwischenraum ein zweites Lamellenpaket (140') der zweiten Teilkupplung (125) tragen, wobei das zweite Lamellenpaket (140') zweite Eingangslamellen (145') und zweite Ausgangslamellen (150'), die axial alternierend angeordnet sind, umfasst und
- zur Betätigung der zweiten Teilkupplung (125) bzw. zur Kompression des zweiten Lamellenpakets (140') ein als topfförmiges Betätigungselement ausgebildeter zweiter Drucktopf (165') vorgesehen ist, der dazu eingerichtet ist, eine axial wirkende Betätigungskraft bereitzustellen, wobei diese Betätigungskraft auf die zweite Endlamelle (155') übertragen wird und
- der zweite Drucktopf (165') an einer axialen Seite eines gegenüber dem ersten elastischen Element (180) radial versetzt angeordneten zweiten elastischen Elements (180') liegt;
wobei das Kupplungsaggregat zumindest ein Element (130, 135, 135', 165, 165', 1005) aufweist, das radialsymmetrisch zur Drehachse (105) angeordnet ist, **dadurch gekennzeichnet, dass**
- das zumindest eine Element (130, 135, 135', 165, 165', 1005) eine uneinheitliche Wandstärke aufweist, wobei jeweils zwischen einem Drucktopf (165, 165') und dem diesem zugeordneten elastischen Element (180, 180') ein axialer Betätigungsstift (625) angeordnet ist, wobei sich die beiden elastischen Elemente (180, 180') über ein gemeinsames Federabstützblech (1005) abstützen, das gegenüber dem Außenlamellenträger (130) gelagert ist, wobei das zumindest eine Element zumindest das Federabstützblech (1005), das im Bereich der elastischen Elemente (180, 180') einen radial verlaufenden Abschnitt aufweist, der verdickt ausgeführt ist, also eine gegenüber anderen Abschnitten des Federabstützblechs (1005) größere Materialstärke aufweist, umfasst.

2. Kupplungsaggregat (100) nach Anspruch 1, wobei das zumindest eine Element (130, 135, 135', 165, 165', 1005) topfförmig ausgebildet ist.

3. Kupplungsaggregat (100) nach Anspruch 1, wobei das zumindest eine Element weiterhin eines von einem Innenlamellenträger (135, 135'), einem Außenlamellenträger (130) und einem axialen Betätigungselement (165, 165') einer der Kupplungen (120, 125) umfasst;

4. Kupplungsaggregat (100) nach Anspruch 1 oder 2, wobei die Wandstärke des zumindest einen Elements (130, 135, 135', 165, 165', 1005) in radialer Richtung veränderlich ist.

5. Kupplungsaggregat (100) nach einem der vorangehenden Ansprüche, wobei die Wandstärke des zumindest einen Elements (130, 135, 135', 165, 165', 1005) in axialer Richtung veränderlich ist.

6. Kupplungsaggregat (100) nach einem der vorangehenden Ansprüche, wobei die Wandstärke des zumindest einen Elements (130, 135, 135', 165, 165', 1005) in Umfangsrichtung veränderlich ist.

7. Kupplungsaggregat (100) nach einem der vorangehenden Ansprüche, wobei das zumindest eine Element (130, 135, 135', 165, 165', 1005) auf einem Umfang um die Drehachse (105) eine Anzahl sich in axialer Richtung erstreckender Fortsätze in Form von Fingern (825) umfasst.

8. Kupplungsaggregat (100) nach einem der vorangehenden Ansprüche, wobei das zumindest eine Element (130, 135, 135', 165, 165', 1005) einen Lamellenträger (130, 135, 135') mit einer radialen Verzahnung umfasst und Zähne der Verzahnung durch die axialen Fortsätze in Form von Fingern (825) gebildet sind.

9. Kupplungsaggregat (100) nach einem der vorangehenden Ansprüche, wobei das zumindest eine Element (130, 135, 135', 165, 165', 1005) einen radial inneren Bereich (920) und einen radial äußeren Bereich (910) umfasst, zwischen dem eine Kraft übertragbar ist, sowie einen radial mittleren Bereich (915), in dem ein um die Drehachse (105) umlaufender Steg (930) ausgebildet ist, der außerhalb des Kraftflusses liegt.

10. Kupplungsaggregat (100) nach einem der vorangehenden Ansprüche, wobei das zumindest eine Element (130, 135, 135', 165, 165', 1005) mittels Schmieden, Drückwalzen, Gießen, Druckgießen, Sintern oder spanender Umformung herstellbar ist.

11. Kupplungsaggregat (100) nach einem der vorangehenden Ansprüche, wobei das zumindest eine Element (130, 135, 135', 165, 165', 1005) aus einem Leichtmetall herstellbar ist.

## Claims

1. Clutch assembly (100) comprising:
- a first clutch (120), with
- an outer multiple disc carrier (130) which is set up to be connected in a torque-transmitting manner to an output shaft of a drive motor (110);
- a first inner multiple disc carrier (135) which is set up to be connected in a torque-transmitting manner to a first input shaft of a transmission (115);
- the outer multiple disc carrier (130) and the inner multiple disc carrier (135) carrying a first multiple disc assembly (140) of the first component clutch (120) in a radial intermediate space, the first multiple disc assembly (140) comprising first input discs (145) and first output discs (150) which are arranged in an axially alternating manner,
- a pressure pot (165) which is configured as a pot-shaped actuating element being provided to actuate the first component clutch (120) and/or to compress the first multiple disc assembly (140), which pressure pot (165) is set up to provide an axially acting actuating force, the said actuating force being transmitted to the first end disc (155), and
- the pressure pot (165) lying on an axial side of a first elastic element (180); comprising, furthermore,
- a second clutch (125) which is arranged offset axially with regard to a common rotational axis (105), with
- a second inner multiple disc carrier (135') for connecting to a second input shaft of the transmission (115),
- the outer multiple disc carrier (130) and the second inner multiple disc carrier (135') carrying a second multiple disc assembly (140') of the second component clutch (125) in a radial intermediate space, the second multiple disc assembly (140') comprising two input discs (145') and second output discs (150') which are arranged in an axially alternating manner, and
- a second pressure pot (165') which is configured as a pot-shaped actuating element being provided to actuate the second component clutch (125) and/or to compress the second multiple disc assembly (140'), which pressure pot (165') is set up to provide an axially acting actuating force, the said actuating force being transmitted to the second end disc (155'), and
- the second pressure pot (165') lying on an axial side of a second elastic element (180') which is arranged offset radially with respect to the first elastic element (180);
the clutch assembly having at least one element (130, 135, 135', 165; 165', 1005) which is arranged radially symmetrically with respect to the rotational axis (105),
**characterized in that**
- the at least one element (130, 135, 135', 165, 165', 1005) has a non-uniform wall thickness, an axial actuating pin (625) being arranged in each case between a pressure pot (165, 165') and the elastic element (180, 180') which is assigned to the latter, the two elastic elements (180, 180') being supported via a common spring support plate (1005) which is mounted opposite the outer multiple disc carrier (130), the at least one element comprising at least the spring support plate (1005) which, in the region of the elastic elements (180, 180'), has a radially running section which is of thickened configuration, that is to say has a greater material thickness in comparison with other sections of the spring support plate (1005).

2. Clutch assembly (100) according to Claim 1, the at least one element (130, 135, 135', 165, 165', 1005) being of pot-like configuration.

3. Clutch assembly (100) according to Claim 1, the at least one element comprising, furthermore, one of an inner multiple disc carrier (135, 135'), an outer multiple disc carrier (130) and an axial actuating element (165, 165') of one of the clutches (120, 125).

4. Clutch assembly (100) according to Claim 1 or 2, the wall thickness of the at least one element (130, 135, 135', 165, 165', 1005) being variable in the radial direction.

5. Clutch assembly (100) according to one of the preceding claims, the wall thickness of the at least one element (130, 135, 135', 165, 165', 1005) being variable in the axial direction.

6. Clutch assembly (100) according to one of the preceding claims, the wall thickness of the at least one element (130, 135, 135', 165, 165', 1005) being variable in the circumferential direction.

7. Clutch assembly (100) according to one of the preceding claims, the at least one element (130, 135, 135', 165, 165', 1005) comprising, on a circumference around the rotational axis (105), a number of projections in the form of fingers (825) which extend in the axial direction.

8. Clutch assembly (100) according to one of the preceding claims, the at least one element (130, 135, 135', 165, 165', 1005) comprising a multiple disc carrier (130, 135, 135') with a radial toothing system, and teeth of the toothing system being formed by way of the axial projections in the form of fingers (825).

9. Clutch assembly (100) according to one of the preceding claims, the at least one element (130, 135, 135', 165, 165', 1005) comprising a radially inner region (920) and a radially outer region (910), between which a force can be transmitted, and a radially central region (915), in which a web (930) is configured which runs around the rotational axis (105) and lies outside the power train.

10. Clutch assembly (100) according to one of the preceding claims, it being possible for the at least one element (130, 135, 135', 165, 165', 1005) to be manufactured by means of forging, flow forming, casting, high pressure die casting, sintering or forming with cutting.

11. Clutch assembly (100) according to one of the preceding claims, it being possible for the at least one element (130, 135, 135', 165, 165', 1005) to be manufactured from a light metal.

## Revendications

1. Groupe d'accouplement (100), comportant :
- un premier accouplement (120) comprenant
- un porte-lamelles externe (130), qui est conçu pour être relié avec transmission de couple à un arbre de sortie d'un moteur d'entraînement (110) ;
- un premier porte-lamelles interne (135), qui est conçu pour être relié avec transmission de couple à un premier arbre d'entrée d'une boîte de vitesses (115) ;
- le porte-lamelles externe (130) et le porte-lamelles interne (135) portant un premier paquet de lamelles (140) du premier accouplement partiel (120) dans un espace intermédiaire radial, le premier paquet de lamelles (140) comportant des premières lamelles d'entrée (145) et des premières lamelles de sortie (150) qui sont disposées en alternance dans le sens axial,
- un pot de pression (165) réalisé sous la forme d'un élément d'actionnement en forme de pot étant présent pour l'actionnement du premier accouplement partiel (120) ou pour la compression du premier paquet de lamelles (140), lequel est conçu pour fournir une force d'actionnement agissant dans le sens axial, cette force d'actionnement étant transmise sur la première lamelle d'extrémité (155) et
- le pot de pression (165) se trouvant au niveau d'un côté axial d'un premier élément élastique (180) ; en outre
- un deuxième accouplement (125) disposé décalé dans le sens axial par rapport à un axe de rotation (105) commun, comprenant
- un deuxième porte-lamelles interne (135') destiné à être relié à un deuxième arbre d'entrée de la boîte de vitesses (115),
- le porte-lamelles externe (130) et le deuxième porte-lamelles interne (135') portant un deuxième paquet de lamelles (140') du deuxième accouplement partiel (125) dans un espace intermédiaire radial, le deuxième paquet de lamelles (140') comportant des deuxièmes lamelles d'entrée (145') et des deuxièmes lamelles de sortie (150') qui sont disposées en alternance dans le sens axial, et
- un deuxième pot de pression (165') réalisé sous la forme d'un élément d'actionnement en forme de pot étant présent pour l'actionnement du deuxième accouplement partiel (125) ou pour la compression du deuxième paquet de lamelles (140'), lequel est conçu pour fournir une force d'actionnement agissant dans le sens axial, cette force d'actionnement étant transmise sur la deuxième lamelle d'extrémité (155') et
- le deuxième pot de pression (165') se trouvant au niveau d'un côté axial d'un deuxième élément élastique (180'), disposé décalé dans le sens axial par rapport au premier élément élastique (180) ;
le groupe d'accouplement possédant au moins un élément (130, 135, 135', 165, 165', 1005) qui est disposé en symétrie radiale par rapport à l'axe de rotation (105), **caractérisé en ce que**
- l'au moins un élément (130, 135, 135', 165, 165', 1005) possède une épaisseur de paroi non uniforme, une broche d'actionnement axiale (625) étant respectivement disposée entre un pot de pression (165, 165') et l'élément élastique (180, 180') qui lui est associé, les deux éléments élastiques (180, 180') prenant appui sur une tôle d'appui à ressort (1005) commune qui est supportée par rapport au porte-lamelles externe (130), l'au moins un élément comportant au moins la tôle d'appui à ressort (1005) qui possède une portion qui s'étend dans le sens radial dans la zone des éléments élastiques (180, 180'), laquelle est exécutée épaissie, c'est-à-dire présente une épaisseur de matière supérieure à celles des autres portions de la tôle d'appui à ressort (1005).

2. Groupe d'accouplement (100) selon la revendication 1, l'au moins un élément (130, 135, 135', 165, 165', 1005) étant réalisé sous la forme d'un pot.

3. Groupe d'accouplement (100) selon la revendication 1, l'au moins un élément comportant en outre l'un parmi un porte-lamelles interne (135, 135'), un porte-lamelles externe (130) et un élément d'actionnement axial (165, 165') de l'un des accouplements (120, 125).

4. Groupe d'accouplement (100) selon la revendication 1 ou 2, l'épaisseur de paroi de l'au moins un élément (130, 135, 135', 165, 165', 1005) pouvant être modifiée dans la direction radiale.

5. Groupe d'accouplement (100) selon l'une des revendications précédentes, l'épaisseur de paroi de l'au moins un élément (130, 135, 135', 165, 165', 1005) pouvant être modifiée dans la direction axiale.

6. Groupe d'accouplement (100) selon l'une des revendications précédentes, l'épaisseur de paroi de l'au moins un élément (130, 135, 135', 165, 165', 1005) pouvant être modifiée dans la direction du pourtour.

7. Groupe d'accouplement (100) selon l'une des revendications précédentes, l'au moins un élément (130, 135, 135', 165, 165', 1005) comportant une pluralité de prolongements sous la forme de doigts (825) qui s'étendent dans la direction axiale sur un pourtour autour de l'axe de rotation (105).

8. Groupe d'accouplement (100) selon l'une des revendications précédentes, l'au moins un élément (130, 135, 135', 165, 165', 1005) comportant un porte-lamelles (130, 135, 135') doté d'une denture radiale et les dents de la denture étant formées par les prolongements axiaux sous la forme de doigts (825).

9. Groupe d'accouplement (100) selon l'une des revendications précédentes, l'au moins un élément (130, 135, 135', 165, 165', 1005) comportant une zone intérieure (920) dans le sens radial et une zone extérieure (910) dans le sens radial, entre lesquelles peut être transmise une force, ainsi qu'une zone centrale (915), dans laquelle est formé un élément jointif (930) circulaire autour de l'axe de rotation (105) qui se trouve en-dehors du flux de force.

10. Groupe d'accouplement (100) selon l'une des revendications précédentes, l'au moins un élément (130, 135, 135', 165, 165', 1005) pouvant être fabriqué par forgeage, emboutissage au tour, moulage, moulage sous pression, agglomération par frittage ou façonnage par enlèvement de copeaux.

11. Groupe d'accouplement (100) selon l'une des revendications précédentes, l'au moins un élément (130, 135, 135', 165, 165', 1005) pouvant être fabriqué à partir d'un métal léger.
